Europäisches Patentamt

European Patent Office

Office européen des brevets

(19)

(11) Publication number: **0 047 113**
**A2**

(12)

# EUROPEAN PATENT APPLICATION

(21) Application number: **81303830.4**

(22) Date of filing: **21.08.81**

(51) Int. Cl.³: **G 05 B 19/23**

(30) Priority: **01.09.80 JP 119827/80**

(43) Date of publication of application:
**10.03.82 Bulletin 82/10**

(84) Designated Contracting States:
**DE FR GB**

(71) Applicant: **FUJITSU FANUC LIMITED**
**5-1, Asahigaoka, 3-chome**
**Hino-shi, Tokyo 191(JP)**

(72) Inventor: **Inaba, Hajimu**
**3-16, Asahigaoka 5-chome**
**Hino-shi Tokyo(JP)**

(72) Inventor: **Miyashita, Hideo**
**38-23, Asahigaoka 2-chome**
**Hino-shi Tokyo(JP)**

(74) Representative: **George, Sidney Arthur et al,**
**Gill Jennings & Every 53-64 Chancery Lane**
**London WC2A 1HN(GB)**

(54) Control circuit for an industrial robot.

(57) A control circuit (11) for controlling an industrial robot in accordance with a position command signal and a position feedback signal (29), comprises an error register (22), a digital-analog converter (26), and a position gain multiplier (23) connected between the error register and the digital-analog converter. The circuit is operative such that when a motor (30) which drives the robot stops rotating or gets ready to stop rotating and an error value held in the error register (22) becomes higher than a predetermined value, the multiplication factor of the position gain multiplier is increased, whereby a higher positioning accuracy is achieved.

*Fig. 2*

EP 0 047 113 A2

## CONTROL CIRCUIT FOR AN INDUSTRIAL ROBOT

This invention relates to a control circuit for an industrial robot.

In a conventional motor control circuit for driving an industrial robot in r, $\Theta$ and z directions, (where r is an absolute value, $\Theta$ is an argument in polar coordinates and the z direction is perpendicular to the r, $\Theta$ plane), the circuit receives a position command signal, determines the difference in the pulse numbers between the position command signal and a position feedback signal, the difference is set in an error register, the content of the error register is converted to an analog value by a digital-analog (DA) converter, and the motor is driven by a speed control device according to the analog value. In this circuit, since the value contained in the error register is directly applied to the DA converter, the control by which the increase in the motor driving signal is controlled cannot be accomplished corresponding to the value indicated in the error register. In particular, there is a problem in that the positioning error is increased when the motor stops rotating.

Furthermore, in a circuit in which a position gain multiplier is inserted between the error register and the DA converter, the circuit has only a constant relationship between the indicated value in the error register and the gain of the position gain multiplier, so that the circuit controls the output of the DA converter along straight lines corresponding to the error quantity set in the error register. Hence, satisfactory control regarding the error in the stopping position cannot always be obtained in the above-mentioned case.

An object of the present invention is to provide an improved control circuit for an industrial robot.

According to the present invention, there is provided a control circuit for controlling an industrial robot in accordance with a position command signal and a position feedback signal, the control circuit comprising an error register, a digital-analog converter, and a position gain multiplier between the error register and the digital-analog converter, characterised in that when a motor which drives the robot stops rotating or gets ready to stop rotating and an error value held in the error register becomes higher than a predetermined value, the multiplication factor of the position gain multiplier is increased.

An embodiment of the invention will now be described, by way of example, with reference to the accompanying drawings, in which

Fig.1 is a block schematic diagram of an industrial robot and a control system incorporating a circuit according to the present invention, and

Fig.2 is a block schematic diagram of the control circuit of the system of Fig.1.

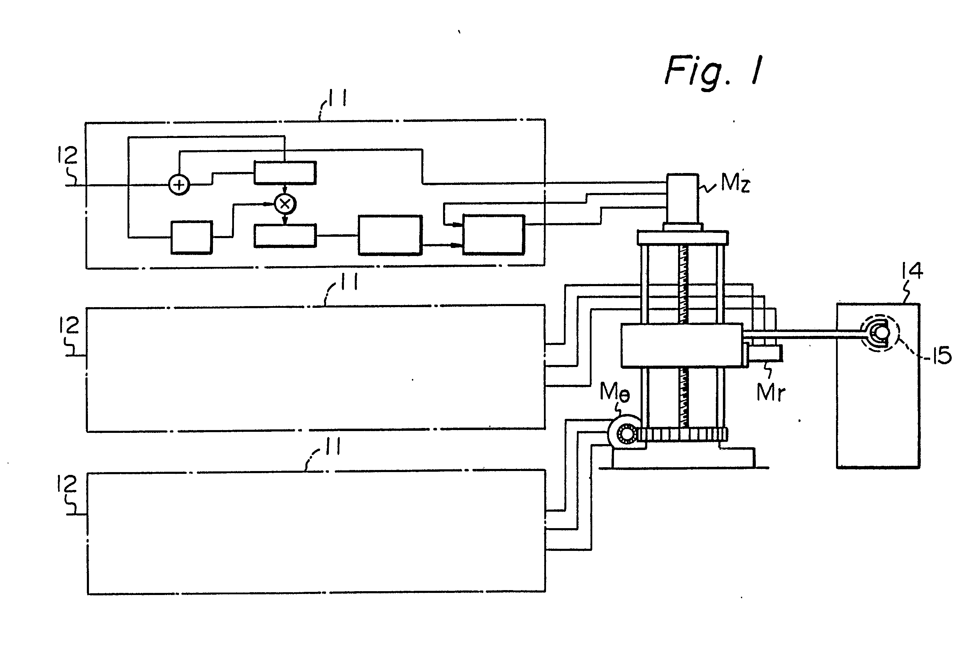

Referring to Fig.1, blocks indicated by chain lines represent respective control circuits 11 for the robot. The input of each control circuit 11 is supplied with a position command input 12. In the control system there are three control circuits 11 which control the movement of the robot in the directions r, $\Theta$ and z, respectively, by supplying respective motors Mr, M$\Theta$ and Mz which drive the robot in those directions. A wrist portion 15 of the robot, the position of which is controlled by the three motors, can position, take off and move workpieces for a machine tool 14.

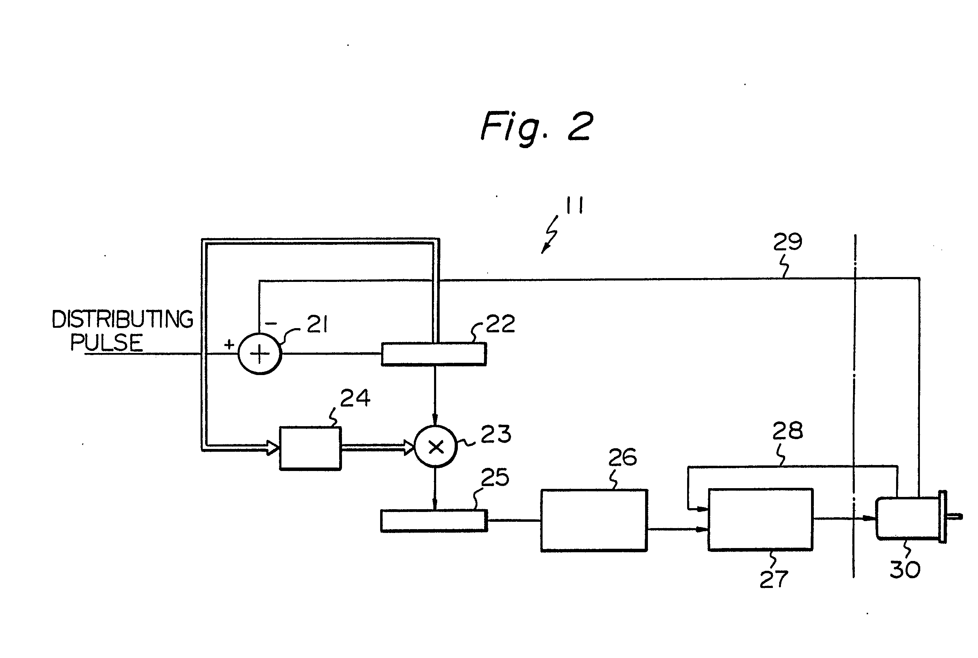

The control circuits 11 are shown in greater detail in Fig.2. A distributing pulse which is applied from an external line as a position command input is supplied to an adder 21. The other input of the adder 21 is connected to a position feedback signal line 29 over which a signal is fed back from a motor 30. The output of the adder 21 is fed to an error register 22, and the value contained in the error register is fed to a position gain multiplier 23. The output of the multiplier 23 is fed to a register 25, and the value held in the register 25 is applied to one input of a speed control device 27, after conversion by a DA converter 26. The output of the speed control device 27 is connected to the motor 30. A speed feedback signal from the motor 30 is applied via a line 28 to the other input of the speed control device 27. The output of the error register 22 is divided, and the divided output is fed to a position gain control circuit 24. The output of the circuit 24 is fed to the position gain multiplier 23 as a position gain command.

The operation of the above-mentioned circuits is described below. The position feedback signal on the line 29 from the motor 30 is subtracted from the distributing pulse by the adder 21, and the value of the difference is indicated on the error register 22. The value in the error register 22 is fed to the register 25, but via the position gain multiplier 23. The multiplier 23 is caused to increase the multiplying factor, by the position gain control circuit 24, when the motor 30 is maintained in the stopped condition, or when the motor stops rotating or gets ready to stop rotating and the position error is higher than a predetermined value. The digital value on the register 25 is converted to an analog signal by the DA converter 26, and the converted signal is applied to the speed control device 27 as a speed command signal. The converted signal and the speed feedback signal which is fed back from the motor 30 on the line 28 constitute two inputs to the speed control device 27. The output of the speed control device 27 controls the motor 30. For example, a multiplier such as a shift register is utilised as the position gain multiplier 23.

By using the above-mentioned control circuits 11, high accuracy in the position gain and a decrease in the position error of the motor 30 can be obtained when the motor approaches the stopping position, or when the motor reaches the almost stopped condition or when the error held in the error register is high or when the motor stops rotating.

By using the present invention, an industrial robot maintains a high stiffness characteristic and its positioning accuracy is increased.

## CLAIMS

1. A control circuit for controlling an industrial robot (14) in accordance with a position command signal (12) and a position feedback signal (29), comprising an error register (22), a digital-analog converter (26), and a position gain multiplier (23) between the error register and the digital-analog converter, characterised in that when a motor (30) which drives the robot stops rotating or gets ready to stop rotating and an error value held in the error register (22) becomes higher than a predetermined value, the multiplication factor of the position gain multiplier (23) is increased.

2. A control circuit as claimed in Claim 1, characterised in that a shift register is used for the position gain multiplier (23).

Fig. 1

Fig. 2